# EUROPEAN PATENT APPLICATION

(11) **EP 0 950 382 A2**
(43) Date of publication of application: **20.10.1999**
(21) Application number: 99830212.9
(22) Date of filing: 14.04.1999
(51) Int. Cl.: A61C 9/00

(54) **Improved adjustable device for a perimetral containment of plaster castings on impression trays for use in dentistry**

(30) Priority: 16.04.1998 IT PZ980002
(71) Applicant: Mecca, Nicola, 85020 Lagopesole (Potenza) (IT)
(72) Inventor: Mecca, Nicola, 85020 Lagopesole (Potenza) (IT)

(57) **Abstract**

Improved adjustable device for a perimetral containment of a casting, plaster or similar suitable materials, on impressio trays to be used in dentistry, consisting of a clamp; preferably however non exclusively executed in paperboard or similar, its height corresponding to the height of the model, made of plaster or other suitable material, including some means for adjustably clamping it around the perimeter of the same tray and for its best functional positioning, mainly employable as a disposable.

## Description

### Technical Field

This invention concerns an improved adjustable device for a perimetral containment of the plaster casting on impression trays for use in dentistry.
It is well known that during the process leading to the formation of dental models from impressions the fluid plaster or other similar suitable material is cast into the impress tray reproducing the cavities that were previously obtained by means of the impression. The casting, of plaster or other suitable material, is made by hand with a notable investment in time and care by the operator; it is also well known that, afterwards, further manual and/or mechanical interventions will be required for removing the overflowing hardened material from the bounds of the tray.

### Background Art

In order to make this operation simpler and to minimize the need for further interventions on hardened material, some devices, that are called boxes, were invented, capable of delimiting the perimeter of the impression tray during the casting phase; such devices, described and illustrated in European Patent Application No. 0694293, in Italian Patent 1273016 and in Utility Model Applications RM96U000172 and RM96U00173 under the name of Squicciarini, present some features and dimensions that are bound up with the different dimensions of the mandibles and jaws of the subjects to whom the protheses are destined; this necessarily involves the availability of many different mounts, with notable costs in total; moreover, once the 'box' is in use, the same is no longer available for another processing till complete hardening of the cast material. Some more devices have been also invented to form limits to the casting of the fluid plaster or similar suitable material for impressions and to form models regarding the field of dental protheses, among which the devices aiming at the formation of a plaster basement, providing an extensible containment wall, described in the German Model G9011173 (Schmitt), in the Italian Application RMU000026 (Gentileschi) and in Patent 1180781 (Pagliari); the elastic annular wall of the German Patent 800874 (Bremer Goldschlagere) and the impression tray with hinged walls ofthe German Patent 520556 (Kohler)
However none of the above solutions meets the demand for manufacturing practicality and inexpensiveness as required to give an answer to the above mentioned problems.
Some proposals for a solution were more recently expressed in the German Patent 3600736 (Weiss) and in the Italian Application RM97A000480 of the undersigner; the proposed devices are based on the use of a stripe made of flexible material to be arranged around the basement of the model (DE PS 3600736) and around the impression tray for use in dentistry (RM97U000480). Such solutions, though innovatory if compared with the previous art, do not solve the main problem connected with casting the plaster or similar on impression trays for use in dentistry, i.e. to have a casting containment device that is supposed: to be disposable, adjustable and to fit all dimensions and configurations of impression trays, to have an extremely low manufacturing and marketing cost, to grant practicality and functionality, and, not least, to be customized by means of various trade-marks, patterns or ornaments without particular extra costs.

### Disclosure of the Invention

Such purposes are reached through the device according to the present invention, consisting of a clamp, preferably however non exclusively realized in paperboard or similar material, provided with clamping means around the perimeter of the impression tray so as to delimit it, thus containing the cast material forming the model until hardened, whereafter the same clamp, once released and reopened, can be removed.

### Brief Description of the drawings

An execution form of the device for the containment of plaster castings on impression trays according to this invention is indicatively, however non exclusively depicted in the attached drawings, where:

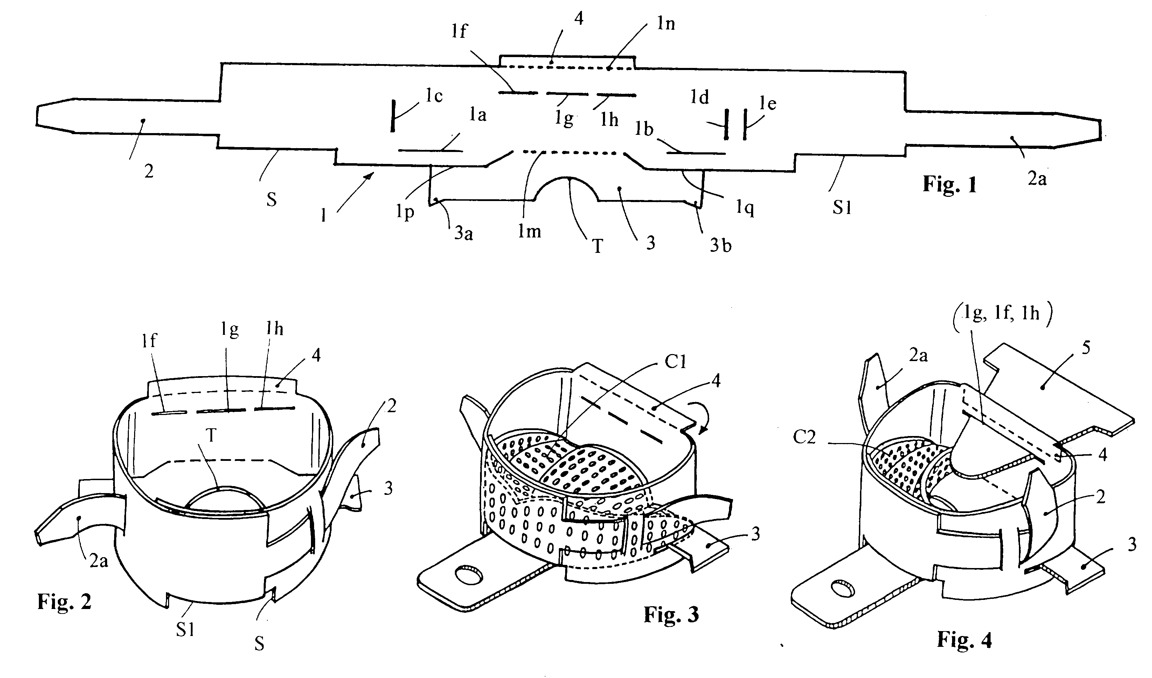

Figure 1 is a plan view of the device according to this invention, when not in use;
Figure 2 represents the device of Figure 1 when 'mounted';
Figure 3 represents the device according to the above mentioned figures, mounted around a dental impression tray (upper impression tray);
Figure 4 represents the device according to the above mentioned figures, mounted around a dental impression tray (lower impression tray).

### Description of the preferred embodiment

As shown in the attached drawings the adjustable device for a perimetral containment of the cast plaster or similar on impression trays for use in dentistry consists of a clamp (1) made of paperboard or similar or other material with suitable features, the height of which corresponds to the height of the plaster model to be obtained, such clamp (1) includes functionally differentiated zones, capable of granting the formation of a containment wall with variable diameter, and providing gaps, such as fissures (1a, 1b, 1c, 1d, 1e, 1f 1g, 1h), either weakening nicks or creasings (1m, 1n), and notches (1p, 1q), and providing at least one end tang, however preferably two end tangs (2, 2a) forming the gripping means for tightening or releasing said clamp (1) when mounted and/or mounted and put on the impression tray.
The functionally differentiated zones in the clamp (1) consist of a portion (3) provided with two shaped apices (3a, 3b), capable of being folded inwards along a weakening line (1m), as well as a portion (4), capable of being folded outwards along a wakening line (1n). Fissures (1a, 1b) are suitable to receive and retain, by engaging the apices (3a, 3b), the portion (3) when folded and tongued in the wall of the curved clamp (1), while the fissures or notches (1c, 1d, 1e) are suitable for receiving the end tangs (2, 2a) in a sliding way and and the fissures or notches (1f, 1g, 1h) are suitable for receiving a tang (5) with the purpose of covering the sublingual cavity in a lower impress tray (C1); the size, profile and dimensions of the tang (5) are so conceived that one single type of tang can hide the sublingual cavities of impression trays of different dimensions, and this can be simply obtained by introducing said tang (5) more or less deeply into the corresponding slot obtained by forcing the adjacent fissures (1f, 1g, 1h).
The profile of the clamp (1) moreover provides functional profiles in its perimeter, consisting of two symmetrical indentations (S, S1) with the purpose, once the clamp is mounted, to form the opening that will receive the thickness of the grip of the impression tray; provision is also made for a semicircular intendation (T) which, together with the sublingual cavity of a lower impression tray, defines the access port to the bottom of a 'plug' in foamed material eventually used to occlude the sublingual cavity as an alternative to or in combination with the tang (5). The portion (4), when folded and connected, forms a stiffening of the corresponding wall portion of the mounted clamp (I), while the portion (3), when mounted, becomes the slip-off preventing stop of the clamp (1) when mounted and put on the impression tray (C1, C2). The profile of the clamp (1) is preferably executed with the main functional zones longitudinally centered for an easier positioning with respect to the impression tray, no matter if instead of two gripping tangs (2, 2a) one single tang is provided.
The above description and illustrations highlight how the device according to this invention works, whereof an image is indicatively, however non exclusively given here below.
To make the impression tray (C1, C2) ready for receiving the cast, of plaster or other material, it will be sufficient to 'mount' the clamp (1) by folding the portion (3) and tonguing its ends (3a, 3b) into the corresponding fissures (1a, 1b), then the tang ends (2, 2a) will be slipped into the corresponding fissures (1c, 1d, 1e), the one directed from inside to the outside (fissure 1c) and the other one outside (fissures 1d, 1e), leaving the tangs (2, 2a) loose; then the impression tray (C1, C2) will be introduced from the top or from the bottom until the handgrip comes out of the opening defined by the pair of indentations (S, S1) while the bottom of the tray rests on the folded portion (3); in the following phase it will be sufficient to pull the ends of the tangs (2, 2a) to have the wall of the clamp (1) adhering to the rim of the tray, thus forming the casting box. Once the clamp (1) is tightened around the tray, it will maintain its shape and position. Precautionarily, it will be however possible to fold the portion of tang outcoming through the guiding fissures to form an angle, and this will prevent any unwanted motion of the clamp; aiming to the same purpose, the ends of the tangs (2, 2a) can be provided with adhesive means.
The inside surface of the clamp (1) will be glossy or plasticized or similarly treated in order to limit absorption of liquids during the casting phase.
After casting and drying the material, plaster or other, it will be then sufficient to remove the clamp (1) to release the casting that will have been obtained in the best conditions.
The materials and dimensions can be any and any detail can be replaced by any equivalent one without therethrough trespassing the protection field of this patent as described and depicted, and hereafter claimed for the specified purposes.

## Claims

1. Improved adjustable device for the perimetral containment of a plaster casting on impression trays for use in dentistry, **characterized in that** it consists of a clamp (1), preferably however non exclusively executed in paperboard or similar, the height of which is so conceived that is corresponds to the height of a model, in plaster or other suitable material, to be obtained, and including some functionally differentiated zones to create a box-shaped containment wall with variable diameter.

2. Improved adjustable device according to claim 1, **characterized in that** the clamp (1) is equipped with gaps, such as fissures, weakening nicks, die-cuttings, and provides gripping means in order to be tightened and released.

3. Improved adjustable device according to the previous claims, **characterized in that** the functionally differentiated zones consist of:
One lower portion (3), providing two shaped apices (3a, 3b), capable of being folded inwards along it corresponding weakening line (1m) in order to form a crosspiece preventing the slip-off of the clamp (1) upwards of the impression tray (C1, C2); one upper portion (4) capable of being folded outwards along its corresponding weakening line (1n) in order to form a back reinforcement of the corresponding section of the clamp (1); two portions or end tangs (2, 2a) defining the gripping means for tightening and/or releasing the same clamp, preferably equipped with adhesive means at their ends.

4. Improved adjustable device according to the previous claims, **characterized in that** the gaps provided in the clamp (1) consist of:
- two fissures (1a, 1b) capable of engaging the shaped apices (3a, 3b) of the lower portion (3);
- three fissures (1c, 1d, 1e) capable of receiving the two portions or end tangs (2, 2a) in a sliding way;
- either a set of adjacent fissures (1f, 1g, 1h) or one single fissure or a pair of fissures, capable of receiving a tang (5) to be used, in case of need, for covering the sublingual cavity in a lower impression tray (C2);
- two weakening lines (1m, 1n) for folding the lower portion (3) and the upper portion (4) respectively;
- two symmetrical die-cuttings (1p, 1q) defining the top profile of the lower portion (3).

5. Improved adjustable device according to the previous claims, **characterized in that** the profile of the clamp (1) is perimetrally and functionally defined by two more symmetrical indentations (S, S1), that are meant to form the port which will receive the grip of the impression tray (C1, C2), thus keeping it flat, as well as one semicircular indentation (T) which, together with the sublingual cavity of a lower impression tray (C2), defines the access port to the bottom of a 'plug' in foamed material used for occluding said sublingual cavity instead of the tang (5).

6. Improved adjustable device according to the previous claims, **characterized in that** for covering the sublingual cavity that is part of the lower impression trays (C2), an accessory component is provided, which consists of a tang (5) executed in the same material as the clamp (1) or other suitable material; such tang (5) is functionally received in a fissure provided in the wall of the clamp (1), for example, however non exclusively, the one formed when forcing the adjacent fissures (1f, 1g, 1h).

7. Improved adjustable device according to the previous claims, **characterized in that** the clamp (1) is executed in paperboard of suitable consistency, with at least one glossy or plasticized side.

8. Improved adjustable device according to the previous claims, **characterized in that** the clamp (1) is executed in synthetic and/or plastic material of any type, either opaque or transparent.

9. Improved adjustable device according to the previous claims, **characterized in that** it is provided with at least one end portion or gripping tang (2, 2a) for tightening and/or releasing the clamp (1) when mounted and or mounted and put on an impression tray (C1, C2).
